# EUROPEAN PATENT APPLICATION

(11) **EP 2 433 500 A1**
(43) Date of publication of application: **28.03.2012**
(21) Application number: 10777406.9
(22) Date of filing: 18.05.2010
(51) Int. Cl.: A22C 25/08, A22C 25/14, A22C 25/16

(54) **SYSTEM FOR CLEANING, CUTTING AND HANDLING FISH**

(30) Priority: 18.05.2009 ES 200930179
(71) Applicant: Gonzales Alvarez, Julio César, E-36330 Vigo, Pontevedra (ES)
(72) Inventor: Gonzales Alvarez, Julio César, E-36330 Vigo, Pontevedra (ES)
(74) Representative: Temino Ceniceros, Ignacio
(86) International application number: PCT/ES2010/070333
(87) International publication number: WO 2010/133739

(57) **Abstract**

System for cleaning, cutting and handling fish (1) that includes: A first station (100) for placing the fish (1) configured for placing the fish vertically on the second peeling station (200), which is configured for removing the skin from the fish (1) by means of sanding without damaging the fish meat; a third station (300) used for cutting the fish that was peeled (2) in the second station (200) configured for detecting and extracting the backbone from the peeled fish (2), which runs along a different path than that of the loins (3); and a fourth station for gutting (400) the loins (3) configured for separating the head and guts using pressurized water, while the clean and unclean fish classifying grippers remove the guts and route them towards a waste grinder.

## Description

The object of this invention is a system for cleaning, cutting and handling fish that allows automating the productive system, which is currently manual and includes several stages or sections that make up the production chain to be packaged in cans or packaged fresh and/or frozen for distribution and sale. This system is categorized within the food industry sector.

### BACKGROUND OF THE INVENTION

Currently, different types of machines are used in the food industry for handling food; however, each of them has their own characteristics. Thus, for example, machines are available for peeling, cutting and boiling but none of them includes a chain production system.

European patent EP0704159 is included within the documents that describe systems and methods for cleaning, cutting and handling fish and describes a method for processing frozen tuna based on injecting salts and then shaking the tuna.

On the other hand, PCT WO98/12929 describes a method and device for cleaning fish that is based on a continuous conveyor belt, but where the handling of the fish is all carried out manually.

Generally, in the canned fish industry, the selection and cleaning process is carried out manually, with the operators selecting, cleaning, cutting, carving and canning the fish.

### DESCRIPTION OF THE INVENTION

The main object of this invention is a system for cleaning, cutting and handling fish, of the type that include a plurality of robot stations, which includes at least the following:
A first robot station for placing the fish configured for placing the fish vertically on the second station for peeling;
a second robot station for peeling configured for removing the skin from the fish by means of sanding, in such a manner as to not damage the meat.
a third station for cutting the fish that was peeled in the second station and configured for detecting and extracting the peeled fish's backbone, separating the two cut loins from the peeled fish's backbone, which runs a different path than that of the loins; and
a fourth station for gutting the loins configured for separating the head and guts using pressurized water, and thanks to the clean and un-clean classifying grippers, the guts are removed and routed as waste towards a grinder;
where the processing of the fish is continuous, going from one station to the next without interruption and ensuring that the fish can be traced at all times thanks to a computer vision means configured for this purpose, which sends the traceability data to an external CPU.

In a second aspect of this invention, a method for cleaning, cutting and handling fish is claimed, which includes at least the following stages:
a first stage for placing the fish where the fish is placed vertically on a placement and transport element;
a second stage for peeling where the skin is removed from the fish by means of sanding, in such a manner as to not damage the meat.
a third stage for cutting, where the backbone is detected and extracted from the previously peeled fish, separating the two cut loins from the peeled fish's backbone, which runs a different path that that of the loins; and
a fourth stage for gutting the loins where the head and guts are separated using a stream of pressurized water, and the clean and unclean fish is classified, the guts are removed and routed as waste towards a grinder;
with this method being continuous, going from one station to the next without interruption and ensuring that the fish can be traced at all times.

Thanks to the described system and method, a production system can be automated, which currently is completely manual and with the resulting cost savings and production modernization.

An additional advantage of this invention is the considerable water conservation since fresh water is constantly used for cleaning in manual processes and the automatic system only uses the necessary amount of water and also incorporates a dirty water recycling system to a purification device, which returns the water to the process.

Finally, it is worth mentioning that the use of this system is environmental friendly since all the waste is separated and sent to recycling.

Throughout the description and claims, the word "encompasses" and its synonyms do not intend to exclude other technical characteristics, additions, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred embodiments indicated herein.

### BRIEF DESCRIPTION OF THE FIGURES

- FIG 1.: shows a perspective view of the system described in this invention.
- FIG 2.: shows a detailed and perspective view of the first station for placement described in this invention.
- FIG 3.: shows a detailed and perspective view of the second station for peeling described in this invention. FIG. 3A shows a detailed view of the robot's cleaning tool. FIG. 3B shows a more detailed view of a practical embodiment of the peeling tool.
- FIG 4.: shows a detailed and perspective view of the third station for backbone extraction of the system described in this invention. FIG. 4A shows a detailed view of the robot's backbone extraction tool. FIG. 4B shows a greater detail of how the cutting robot uses a water jet system with blasting, which is part of a particular embodiment of this system.
- FIG 5.: shows a detailed and perspective view of the fourth station for gutting described in this invention. FIG. 5A shows a detailed view of the robot's gutting tool.

### PREFERRED EMBODIMENT OF THE INVENTION

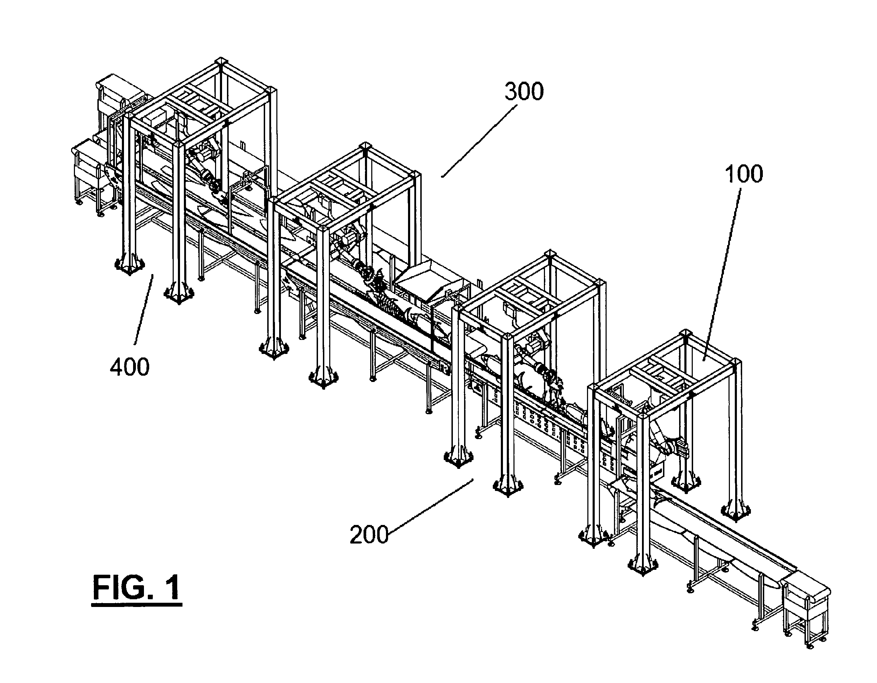

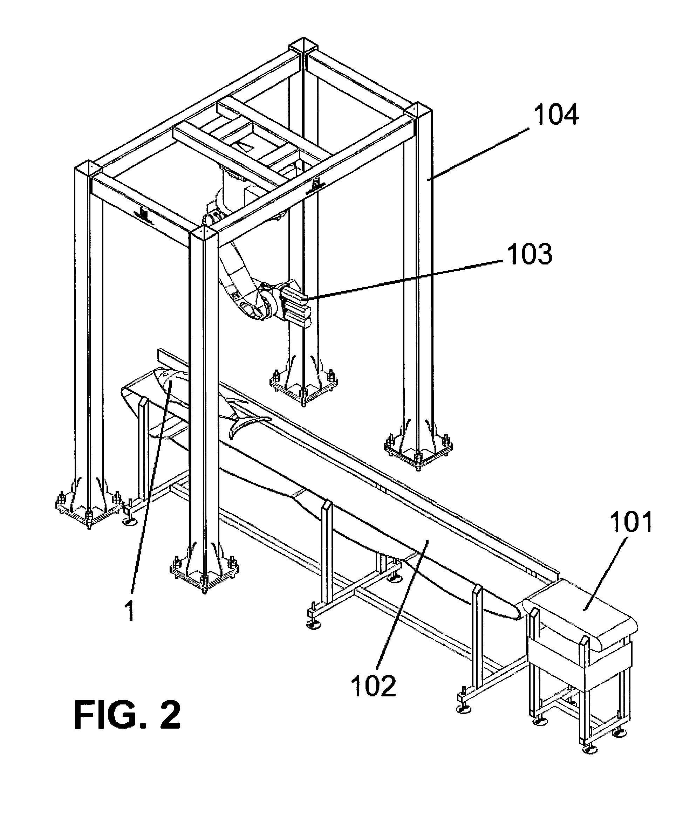

As can be seen in figure 1, in a preferred embodiment, the system includes a first robot station (100) for placing the fish (1) on the second station for peeling (200). This first station (100) (figure 2), also includes an uninterrupted fish weight scale (101) at the beginning of the station where the fish is placed (1) for example, manually or originating from a previous transport conveyor belt, which is not shown in the figure. Then, the fish (1) move from the weight scale (101) to a conventional transport conveyor belt (102), which will carry the fish (1) to the placement robot's (103) operating area located at the end of the belt (102) and supported by a frame (104) that projects over the end of the belt (102). Once the presence of fish is detected at this point using conventional presence detection means, the robot (103) will pick up the fish (1) and will place it at the entrance to the second station for peeling (200).

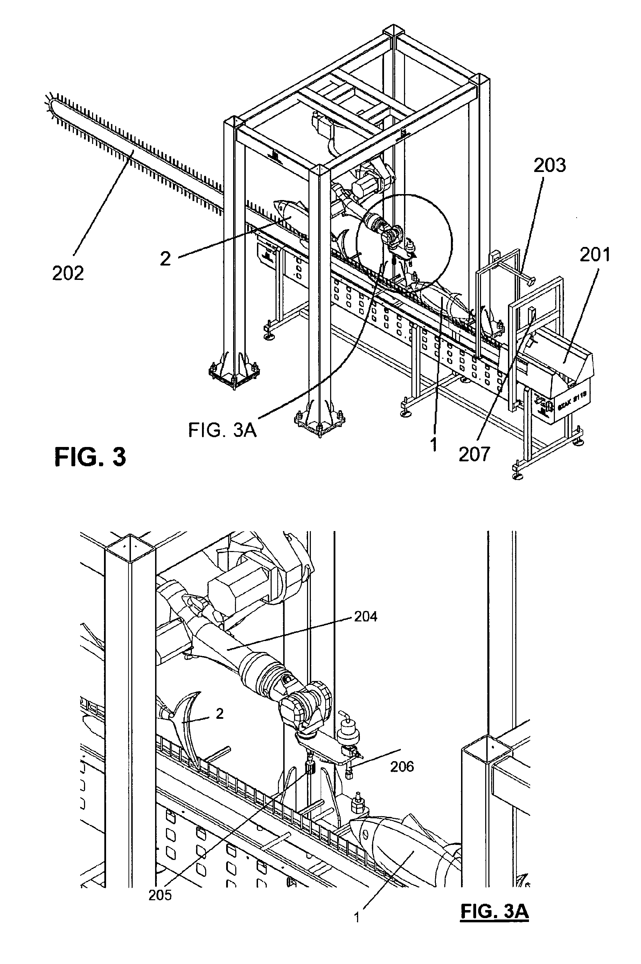

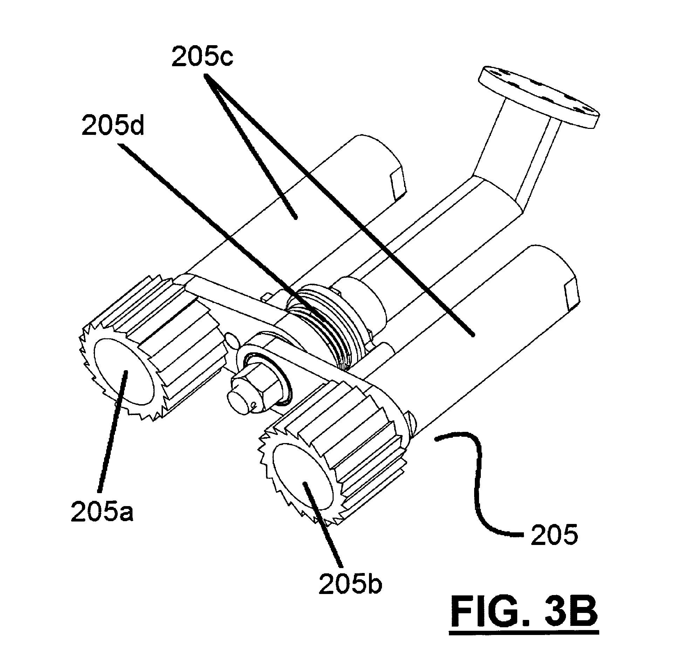

The fish originating from the first station (100) is placed over a positioning element (201) at this second station for peeling (200) (figure 3). This positioning element (201) essentially includes a "V" shaped body and the placement robot (103) places the fish (1) on top of the valley of the V shaped structure, where a piston (207) pushes and sticks the fish on a belt of nails (202). This belt of nails (202) can also be designed as a slide with a plurality of aligned nails, with this slide being moved by a chain that is jointly attached to the slide.

In a second embodiment, the insertion of the tuna on the belt of nails or slide (202) is carried out using two transport belts forming the "V" shaped body, and using two pistons at the end of the line, with the upper piston holding the fish (1) to prevent it from moving upward and the lower piston sticks the belt (202) into the bottom part of the fish (1).

Once the fish (1) is stuck in a vertical position over the belt of nails or slide (202), it passes underneath a portico where a computer vision (203) means are located to facilitate the traceability of the fish (1), sending data relative to the fish such as the weight, origin or size to an external CPU, which is not shown in the attached figures. After this, the fish (1) move to the peeling area, which is determined by the peeling robot's (204) operating area. This robot (204) includes a tool (figure 3a) at its end that is comprised of a grinder (205) configured for removing the skin off the fish (1) by sanding it without damaging the meat. Likewise, a means for a continuous stream of water (206) is incorporated on the tool itself, on one hand configured for cleaning the sanding of the grinder (205) and on the other end, for cutting the fins off the fish (1). Once the task is completed, the peeled fish (2) remains on the belt of nails or slide (202) and is transported to the next station for cutting and separating the backbone (300).

FIG. 3B shows a detailed view of a practical embodiment of the peeling tool or grinder (205). Thus, once the mechanical switching element detects the arrival of fish (1), the movement of the belt or slide (202) is interrupted, and a means for braking ensures that the belt or slide (202), in spite of the inertia, stops at a fixed point, blocking the fish (1) by means of a side piston mechanism that prevents the fish from moving upward and sideways; then, the peeling of the fish (1) begins. The peeling tool or grinder (205) incorporates two parallel mills (205a and 205b), which cut in opposite turn directions in order to peel with the same angle of attack in all peeling movements, operated by pneumatic motors (205c) and fastened to flexible rotating arms by means of torsion springs (205d). Viewed from the bottom, the rotation of the mill is counter-clockwise, movement towards the fish's (1) tail. Tool (205) incorporates a torsion spring (205d), which causes the tool to always press against the fish (1); thus peeling it. When a row ends, the head turns and begins peeling a lower row. The peeling tool (205) works on the tuna's side; when one side is completed, it switches to the other side in order to minimize unnecessary movements of the peeling robot (204).

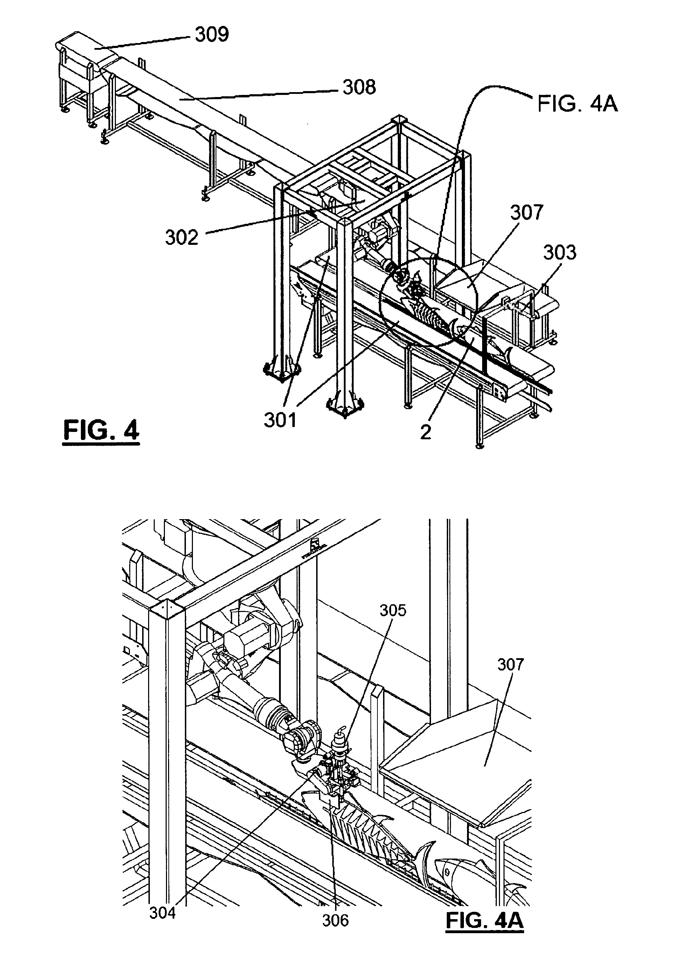

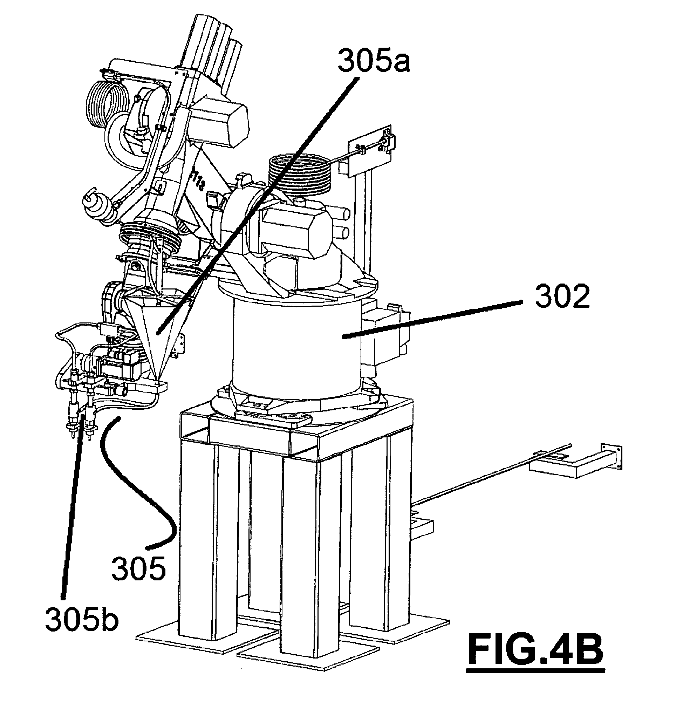

The third station for cutting and separating the backbone (300) is configured for cutting the peeled fish (2) in two using a stream of pressurized water; all of this in such a manner that as the water stream cutters cut the bone, a gripper holds it and separates it, which allows correcting cutting defects while it holds the bone when the fish loins (3) drop laterally onto a conventional transport belt (301). More specifically, and as can be seen in figure 4, the third station for cutting and separating the backbone (300) includes:
(a) entry of the peeled fish (2) on the belt of nails (202) towards a cutting robot's operating area; where in this area and on a portico, a second means of computer vision (303) are located to detect the dorsal fin of the peeled fish (2), which also marks the position of the peeled fish's bone (2).
(b) once the peeled fish is placed on the actual cutting area, the cutting robot (302) uses a tool on the fish (shown in figure 4a), which also includes the following:
   - a servomotor (304) system for moving the cutters (305) and the grippers (306);
   - a means for cutting (305) the bone using pressurized water, and
   - separating means (306) or grippers configured for separating the fish's left and right loins with respect to the bone, preventing that while the water is cutting, the loins do not stick to each other because they are frozen; also, these grippers (306) would have their lower and front edges finishing off the cut; once the grippers (306) pass longitudinally over the fish bone, it extracts it;

In the particular embodiment shown in FIG.4B, the means for cutting (305) using pressurized water are assisted by the injection of an abrasive, preferably salt, in such a manner that the abrasive is stored in the adjacent tank (395a), which due to the Venturi effect and gravity, falls into an injection chamber (305b) where the pressurized water pushes the abrasive element over the fish (1) generating an abrasive effect that is greater than that of the water itself, resulting in a greater capacity for cutting.

Upon completion of the cutting, the robot (302) places the backbone over an inclined channel (307) and from there to a standard transport belt (308) that carries the bones to a scale (309).

On the other hand, the fish loins (3) are respectively placed on two standard transport belts (301) located at the right and left of the cutting area, which carry the loins to a fourth station for gutting (400).

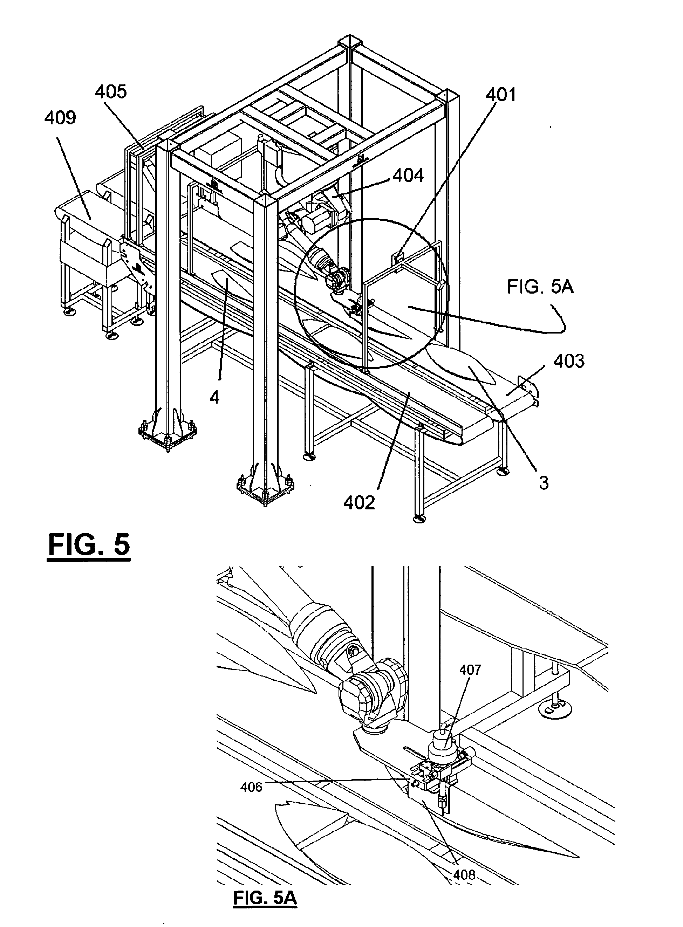

A fourth station for gutting (400), which is shown in detail in figure 5, includes at least a system for cutting and separating similar to the one shown in figure 4a configured for separating the head and guts using pressurized water, and thanks to the clean and dirty classifying grippers, the guts are removed and routed as waste towards a grinder. More specifically, the station for gutting (400) includes:
(a) a third means of computer vision (401) located over a portico that is raised over the transport belts (402, 403) configured to assure the traceability of the product and to also observe the loins (3) and recognize their characteristics for the subsequent gutting.
(b) an area for gutting, where a gutting robot (404) that incorporates a gutting tool (shown in figure 5a) is configured for separating the head and the guts from the loins (3) and remove them, placing them on a guts outlet belt (403) and leaving the clean loin (4) on a clean product transport belt (402); and
(c) an inspection means using X-rays over the clean product belt (402), configured for detecting any bones remaining in the clean loins (4), in such a manner that if any product still contains bones and/or guts, a separation device (405) picks up that loin and places it on the guts outlet belt (403);

The gutting tool (figure 5a) also incorporates a servomotor system (406) for moving the cutters (407) and the grippers (408); a second means for cutting (407) loins (3) and gutting using pressurized water; and a classifying means (408) or grippers configured for classifying the clean and unclean fish, as well as to turn the product over and transport product between each belt (402, 403).

Upon completion of the described cutting and cleaning process, the pieces (clean loins) (4) are automatically weighed on an uninterrupted scale (409) and continue through a conventional transport belt (not shown in the figures) towards the functional food injection area and from there to the microwave for cooking and packaging, or simply packaged for sale; fresh or frozen.

## Claims

1. System for cleaning, cutting and handling fish (1), of the type that include a plurality of robot stations **characterized in that** it includes at least the following:
a first station (100) for placing the fish (1) configured for placing the fish (1) vertically on the second station for peeling (200);
a second station for peeling (200) configured for removing the skin from the fish (1) by means of sanding, in such a manner as to not damage the fish meat;
a third station for cutting (300) the fish (2) that was peeled in the second station (200) and configured for detecting and extracting the peeled fish's (2) backbone, separating the two cut loins (3) from the peeled fish's (2) backbone, which runs a different path than that of the loins (3); and
a fourth station for gutting (400) the loins (3) configured for separating the head and guts using pressurized water, and thanks to the clean and un-clean classifying grippers, the guts are removed and routed as waste towards a grinder;
where the processing of the fish (1) is continuous, going from one station to the next without interruption and ensuring that the fish can be traced at all times thanks to a computer vision (203,303,401) means configured for this purpose, which sends the traceability data to an external CPU.

2. System in accordance with claim 1 where the first station (100) includes an uninterrupted fish weighing scale (101) at the beginning of the station where the fish will be placed (1); and where subsequently, the fish (1) goes from the weight scale (101) to a conventional transport belt (102), which will carry the fish (1) to the placement robot's (103) operating area that is located at the end of the belt (102) and supported by a frame (104) that projects over the end of the belt (102); all of this configured so that once the presence of fish is detected at this point using conventional presence detection means, the robot (103) will pick up the fish (1) and will place it at the entrance to the second station for peeling (200).

3. System in accordance with claims 1 and 2 where the second station for peeling (200) includes a positioning element (201) for the fish (1) originating from the first station (100) that is configured for sticking the fish (1) onto the nail transport belt (202); and then passes underneath a portico where a computer vision (203) means are located to facilitate the traceability of the fish.

4. System in accordance with claim 3 where the positioning element (201) essentially also includes a "V" shaped body and the placement robot (103) places the fish (1) on top of the valley of the V shaped structure, where a piston (207) pushes and sticks the fish on a belt of nails (202).

5. System in accordance with the aforementioned claims, where the peeling station (200) includes a peeling area, determined by the peeling robot's (204) operating area, which includes a peeling tool at its end that is essentially comprised of a grinder (205) configured for removing the skin off the fish (1) by sanding it without damaging the meat, and a means for a continuous water stream (206) configured for:
(a) cleaning the sanding by the grinder (205) and,
(b) cutting the fins of the fish itself (1).

6. System in accordance with the aforementioned claims, where the third station for cutting and separating the backbone (300) includes:
an entry of the peeled fish (2) on the belt of nails (202) towards a cutting robot's (302) operating area; where in this area and on a portico, a second means of computer vision (302) are located and also configured to detect the dorsal fin of the peeled fish (2), which also marks the position of the peeled fish's (2) bone; and
where once the peeled fish (2) is placed in the actual cutting area, the cutting robot (302) uses a cutting and separating tool on the fish; once the cutting is completed, the fish loins (3) are respectively placed on standard transport belts (301) that are located to the right and left of the cutting area.

7. System in accordance with claim 6, where the cutting robot's (302) cutting and separating tool includes:
a servomotor system (304) for moving the cutters (305) and the grippers (306); a means for cutting (305) the bone using pressurized water; and a means for separating (306) or grippers, configured for separating the fish's left and right loins with respect to the bone, preventing that while the water is cutting, the loins do not stick to each other,
and where also, these grippers (306) would have their lower and front edges finishing off the cut; once the grippers (306) pass longitudinally over the fish bone, they would extract the bone, which would be placed over an inclined channel (307) by the robot, and from there to a standard transport belt (308) that transports the bones to a scale (309).

8. System in accordance with the aforementioned claims where the fourth station for gutting (400) includes:
(a) a third means of computer vision (401) located over a portico that is raised over the transport belts (402, 403) configured for in addition to assuring the traceability, to also observe the loins (3) and recognize their characteristics for the subsequent gutting;
(b) an area for gutting, where a gutting robot (404) that incorporates a gutting tool (shown in figure 5a) is configured for separating the head and the guts from the loins (3) and remove them, placing them on a gut outlet belt (403) and leaving the clean loin (4) on a clean product transport belt (402); and
(c) an inspection means using X-rays over the clean product belt (402), configured for detecting any bones remaining in the clean loins (4), in such a manner that if any product still contains bones and/or gut, a separation device (405) picks up that loin and places it on the guts outlet belt (403);

9. System in accordance with claim 8 where the gutting tool also incorporates a servomotor system (406) for moving the cutters (407) and the grippers (408); a second means for cutting (407) loins (3) and gutting using pressurized water; and a classifying means (408) or grippers configured for classifying the clean and unclean fish, as well as to turn the product over and transport product between each belt (402, 403).

10. Method for cleaning, cutting and handling fish (1), implemented in the system of claims 1 thru 9 and **characterized in that** it includes at least the following stages:
a first stage of placing the fish (1) and where the fish (1) is placed vertically on a placement and transport element;
a second stage for peeling where the skin is removed from the fish by means of sanding, in such a manner as to not damage the meat;
a third stage for cutting, where the backbone is detected and extracted from the previously peeled fish (2), separating the two cut loins (3) from the peeled fish's backbone (2), which runs a different path than that of the loins (3); and
a fourth stage for gutting the loins (3) where the head and guts are separated using a stream of pressurized water, and the clean and unclean fish is classified; the guts are removed and routed as waste towards a grinder;
with this method being continuous, going from one station to the next without interruption and ensuring that the fish can be traced at all times.
